# EUROPÄISCHE PATENTANMELDUNG

(11) **EP 1 826 025 A2**
(43) Veröffentlichungstag der Anmeldung: **29.08.2007**
(21) Anmeldenummer: 07003112.5
(22) Anmeldetag: 14.02.2007
(51) Int. Cl.: B60B 21/08, B62B 13/10, B62B 13/14, B62B 17/08, B62B 19/02, B62M 1/10, B62B 13/18

(54) **Fahrzeug, dessen Sitz Teil der Lenkung ist**

(30) Priorität: 24.02.2006 DE 102006009183; 26.07.2006 DE 102006035237
(71) Anmelder: Sports Tech GmbH, 97525 Schwebheim (DE)
(72) Erfinder: Kraus, Florian, 84130 Dingolfing (DE); Boerboom, Stephan, 84172 Buch am Erlbach (DE); Ress, Michael, 97525 Schwebheim (DE)
(74) Vertreter: Castell, Klaus

(57) **Zusammenfassung**

Um Fahrzeuge, insbesondere Fun-Sport-Fahrzeuge, weiter zu entwickeln, schlagt die Erfindung ein Fahrzeug (1) mit einem Gestell (2), an weichem wenigstens ein Sitz (9) angeordnet ist, mit Mitteln zum Rollen (3A,4A,5A,6A) und/oder Gleiten (3,4,5,6) auf einem Untergrund und mit einer Lenkung zum Lenken des Fahrzeuges vor, bei weichem der Sitz Mittel zum Lenken des Fahrzeuges umfasst.

## Beschreibung

Die Erfindung betrifft ein Fahrzeug mit einem Gestell, an welchem wenigstens ein Sitz angeordnet ist, mit Mitteln zum Rollen und/oder Gleiten auf einem Untergrund und mit einer Lenkung zum Lenken des Fahrzeuges. Darüber hinaus betrifft die Erfindung eine Felge für ein Fahrzeugrad sowie eine Bremsscheibe für eine Bremseinrichtung eines Fahrzeuges. Die Erfindung betrifft auch ein Verfahren zum Lenken eines Fahrzeuges mit einem Sitz, welches auf einem Untergrund rollt oder gleitet sowie die Verwendung eines Sitzes eines Fahrzeuges mit einer Lenkung.

Gattungsgemäße Fahrzeuge sind in nahezu unzähliger Vielfalt aus dem Stand der Technik bekannt. Insbesondere aus dem Bereich Fun-Sportarten existieren eine Vielzahl an exotischen Fahrzeugen, bei welchen weniger der Nutzen des Fahrzeuges aber vielmehr der Spaß mit dem Fahrzeug im Vordergrund steht.

Aus der DE 299 80 001 U1 ist eine Freizeitsportanlage bekannt, die achterbahnähnlich mit Tragrohren ausgestattet an einem Berghang installiert wird und auf der Fahrwagen schwerkraftbetrieben talabwärts fahren. Die Fahrwagen werden durch Tragrohre, welche auch die Fahrbahn bilden, geleitet, können jedoch vom Fahrgast hinsichtlich der Geschwindigkeit individuell gesteuert werden. Als Aktivbremse wirkt eine Zange, indem Bremsbacken eine Führungsschiene von oben und unten umgreifen und zwischen sich einspannen. Die Tragräder der Fahrwagen sind zudem mit Trommelbremsen ausgestattet, die sich zwangsläufig durch Fliehkraft bei einer festgelegten Drehzahl betätigen. Durch diese Fliehkraftregelung kann die maximale Fahrgeschwindigkeit jedes einzelnen Fahrwagens auf baulich besonders einfache Art und Weise betriebssicher eingestellt werden.

Weiter ist aus der DE 203 01 577 U1 ein dreirädriges Fahrzeug bekannt, das insbesondere ein Sport- oder Funsport-Gerät darstellt, welches beispielsweise als Downhill-Sportgerät oder Downhill-Fahrzeug benutzt werden kann. Eine Luftbereifung bietet unter anderem eine komfortable Federung, so dass das Fahrzeug problemlos im Gelände und auf insbesondere unbefestigten Wegen und Straßen gefahren werden kann. Das Fahrzeug besteht im Wesentlichen aus zwei Teilen, die verstellbar miteinander verbunden sind. Am hinteren Teil sind zwei Räder mit relativ großem Radstand montiert, die zusammen mit einem niedrigen Schwerpunkt ein sicheres Fahren im Gelände ermöglichen. Am vorderen Gestänge ist eine Fahrzeuggabel drehbar gelagert, an der ein drittes Rad befestigt ist. An der Radgabel ist in der üblichen Form auch ein Lenker befestigt, mit dem ein manuelles Lenken des Fahrzeuges möglich ist.

Darüber hinaus ist aus der DE 203 00 538 ein Rollenrodel bekannt, der im Wesentlichen aus einer Sitzfläche, zwei Verbindungselementen, einer linken und einer rechten Kufe besteht. An den beiden Kufen sind jeweils Laufrollen befestigt, wie sie bei Inlineskates Verwendung finden. Diese Rollen können einzeln durch einen Zugriemen gebremst werden. Werden hierbei Rollen der linken Kufe gebremst, so fährt der Rollenrodel nach links. Entsprechend fährt der Rollenrodel nach rechts, wenn die Rollen der rechten Kufe gebremst werden.

Es ist Aufgabe vorliegender Erfindung ein Fahrzeug bereit zu stellen, welches insbesondere für Downhill-Abfahrten extrem leicht, wendig und sicher zu fahren ist.

Die Aufgabe der vorliegenden Erfindung wird von einem Fahrzeug mit einem Gestell gelöst, an welchem wenigstens ein Sitz angeordnet ist, mit Mitteln zum Rollen und/oder Gleiten auf einem Untergrund und mit einer Lenkung zum Lenken des Fahrzeuges, wobei der Sitz Mittel zum Lenken des Fahrzeuges umfasst.

Da der Sitz die Mittel zum Lenken des Fahrzeuges umfasst, ist es möglich, das vorliegende Fahrzeug erfindungsgemäß mit dem Sitz des Fahrzeuges zu lenken. Hierdurch erhält der Fahrer eine besonders innige Beziehung zu dem Fahr- und Lenkverhalten des Fahrzeugs.

Der Begriff "Sitz" erfasst vorliegend jegliche Einrichtungen, die dazu geeignet sind, wenigstens einem Fahrzeugführer eine sichere Sitzgelegenheit am Fahrzeug bereit zu stellen.

Es versteht sich, dass der Sitz hierbei in vielfältiger Ausführung vorgesehen sein kann. Je nach Einsatzgebiet, reicht bereits eine ebene Sitzfläche aus, um dem Fahrzeugführer das Sitzen und Lenken des Fahrzeuges zu ermöglichen.

Um den Fahrkomfort für Fahrpersonen zu erhöhen, ist es vorteilhaft, wenn der Sitz eine Feder-Dämpfer-Einrichtung aufweist.

Es versteht sich darüber hinaus, dass eine derartig ebene Sitzfläche eine Rückenlehne aufweisen kann, an welcher sich der Fahrzeugführer während der Fahrt anlehnen kann. Um den Sitz sehr gut an verschiedene Körpergrößen anpassen zu können, ist es vorteilhaft, wenn die Rückenlehne längsverstellbar an dem Fahrzeug befestigt ist. Vorliegend bedeutet der Begriff "längsverstellbar", dass die Rückenlehne entlang der Horizontaldrehachse verschiebbar ist.

Der Sitz kann auch mit Sicherungssystemen für den Fahrzeugführer ausgestattet sein kann. Beispielsweise umfasst der Sitz eine Rückhalteeinrichtung wie etwa einen Sicherheitsgurt. Mittels des Sicherheitsgurtes kann der Fahrer auch besonders intensiv an bzw. in den Sitz gedrückt werden, wodurch sich das Feeling für ein besonders präzises Lenken verbessert.

Ein besonders spassiges Fahrvergnügen für mehr als eine Fahrperson ergibt sich, wenn der Sitz bzw. eine Sitzfläche mehr als eine Fahrperson aufnehmen kann. Hierbei sitzen die Fahrpersonen vorzugsweise hintereinander auf dem einzigen Sitz.

Vorteilhaft ist es, wenn der Sitz ein Bestandteil der Lenkung des Fahrzeuges ist. Hierdurch ist es dem Fahrzeugführer möglich, mittels einer Relativbewegung des Sitzes das Fahrzeug zu lenken. Dies kommt insbesondere auch behinderten Personen zugute.

Besonders vorteilhaft ist es, wenn der Sitz der Lenker des Fahrzeuges ist. Der Lenker ist vorliegend vorteilhafter Weise mittels des Gesäßes des Fahrers zu betätigen, wodurch das Fahrzeug durch eine Gesäßbewegung, insbesondere durch Verlagerung des Körperschwerpunktes, lenkbar wird.

Hierdurch kann auf einen zusätzlichen und sonst üblichen Lenker, wie er bei allen Automobilen üblich ist, verzichtet werden. Durch den Verzicht auf einen bisher üblichen Lenker lässt sich auch das Gewicht des vorliegenden Fahrzeuges weiter reduzieren. Vorteilhaft ist es weiter, dass auf den üblicherweise in Front des Fahrers angeordneten Lenker verzichtet werden kann, so dass auch die Verletzungsgefahr des Fahrers durch Kontakt mit einem derartigen Lenker bei einer ungünstig verlaufenden Fahrt vermieden wird.

Eine vorteilhafte Ausführungsvariante sieht vor, dass der Sitz derart mit den Mitteln zum Rollen und/oder Gleiten verbunden ist, dass eine Relativbewegung des Sitzes gegenüber dem Gestell des Fahrzeuges eine Relativbewegung der Mittel zum Rollen und/oder Gleiten gegenüber dem Gestell des Fahrzeuges bewirkt. Durch eine derartige Verbindung kann das Fahrzeug aktiv mittels einer Bewegung des Sitzes gelenkt werden.

In diesem Zusammenhang wird die Aufgabe der Erfindung auch von einem Verfahren zum Lenken eines Fahrzeuges mit einem Sitz, welches auf einem Untergrund rollt oder gleitet, gelöst, bei welchem zum Lenken des Fahrzeuges der Sitz relativ zum Fahrzeug bewegt wird.

Es ist vorteilhaft, wenn zum Lenken des Fahrzeuges der Sitz um eine Horizontaldrehachse geneigt wird.

Der Begriff "Horizontaldrehachse" beschreibt vorliegend eine Drehachse, die im Wesentlichen horizontal verläuft und somit auch im Wesentlichen horizontal orientiert ist.

Insbesondere bei Fahrzeugen, welche pro Radachse mehr als ein Rad aufweisen, kann der Fahrzeugführer durch Verlagern seines Körpers, insbesondere seines Körperschwerpunktes, zum Kurveninneren gleichzeitig bei einer Kurvenfahrt auftretenden Querbeschleunigungskräften entgegen wirken. Bei den Radachsen unterschiedet man zwischen Vorderrad- und Hinterradachse.

Vorliegend ist es besonders vorteilhaft, wenn das Fahrzeug nach rechts gelenkt wird, indem der Sitz des Fahrzeuges in Fahrtrichtung gesehen im Uhrzeigersinn um eine Horizontaldrehachse geneigt wird.

Entsprechend ist es vorteilhaft, wenn das Fahrzeug nach links gelenkt wird, indem der Sitz des Fahrzeuges in Fahrtrichtung gesehen entgegen dem Uhrzeigersinn um eine Horizontaldrehachse geneigt wird.

Um ein Neigen des Sitzes zu ermöglichen, ist es vorteilhaft, wenn der Sitz drehbar um eine Horizontaldrehachse am Gestell gelagert ist.

Eine weitere bevorzugte Ausführungsvariante sieht vor, dass die Lenkmittel ein Lenkgetriebe, insbesondere ein Lenkgestänge, umfassen. Mittels eines Lenkgetriebes lassen sich Lenkkräfte vorteilhaft umlenken.

Eine entsprechende Verfahrensvariante sieht vor, dass mittels des Sitzes eine Lenkung und/oder ein Lenkgestänge betätigt wird.

Das Fahrzeug lässt sich vorteilhaft lenken, wenn das Lenkgetriebe und/oder das Lenkgestänge den Sitz und die Mittel zum Rollen und/oder Gleiten miteinander verbinden.

Besonders leicht baut das Fahrzeug, insbesondere das Gestell des Fahrzeuges, wenn das Lenkgetriebe und/oder Lenkgestänge einen Teil des Gestells bilden.

Um gegebenenfalls mehr als eine Person mit dem vorliegenden Fahrzeug zu befördern, ist es vorteilhaft, wenn das Fahrzeug mehr als einen Sitz aufweist. Die Sitze sind vorzugsweise hintereinander, insbesondere in einer Reihe hintereinander, angeordnet, so dass alle Fahrpersonen hintereinander auf dem Fahrzeug sitzen.

Damit das Lenken des Fahrzeuges betriebssicher von dem Fahrzeugführer vorgenommen werden kann, ist es einerseits vorteilhaft, wenn lediglich mittels des Sitzes des Fahrzeugführers das Fahrzeug gelenkt wird.

Andererseits ist es vorteilhaft, wenn ein weiterer Sitz des Fahrzeuges ebenfalls Lenkfunktionen des Fahrzeuges übernehmen kann, so dass auch von einem weiteren Sitz das Fahrzeug gelenkt werden kann.

Hierbei ist es jedoch vorteilhaft, wenn zusätzlich Mittel an dem Fahrzeug vorgesehen sind, die es ermöglichen, lediglich einen Sitz des Fahrzeuges als Lenkung "frei" zu geben.

Kumulativ oder alternativ zu der vorgenannten Sitzlenkung, ist es vorteilhaft, wenn die Lenkung des Fahrzeuges weitere Mittel zum Lenken des Fahrzeuges umfasst, welche mittels Beinen und/oder Füßen eines Fahrzeugführers betätigbar an dem Fahrzeug angeordnet sind.

Durch die weiteren Lenkmittel, auf welche Beine und/oder Füße einwirken können, lässt sich der Fahrspaß weiter erhöhen, da der Fahrzeugführer durch zusätzliches Abstützen der Beine und/oder Füße das Lenkverhalten des Fahrzeuges zusätzlich regulieren kann.

Gegebenenfalls könnte das Fahrzeug auch unabhängig von der Sitzlenkung lenkbar sein, ohne dass ein klassischer Lenker verwendet werden muss. Deshalb sind vorliegend alle Merkmale hinsichtlich der weiteren Lenkmittel auch ohne die übrigen Merkmale vorteilhaft.

In diesem Zusammenhang ist es vorteilhaft, wenn die Lenkmittel Auflageeinrichtungen für Beine und/oder Füße eines Fahrzeugführers aufweisen. Insbesondere bei längeren Abfahrten und/oder sehr anspruchsvollen Abfahrten ist es vorteilhaft, wenn Beine und/oder Füße sicher auf derartige Auflageeinrichtungen aufgelegt werden können.

Eine sehr direkte Lenkung des vorliegenden Fahrzeuges ist möglich, wenn die Mittel zum Rollen und/oder die Mittel zum Gleiten die Auflageeinrichtungen aufweisen.

Um Beine und/oder Füße einer Fahrperson auch bei widrigen Bedingungen fest mit diesbezüglichen Auflageeinrichtungen verbunden zu halten, ist es vorteilhaft, wenn entsprechende Haltemittel, wie Fußschlaufen, an dem Fahrzeug vorgesehen sind. Hierdurch können Verletzungen vermieden werden.

Weiter vorteilhaft ist es, wenn die weiteren Lenkmittel selbst oder Bauteile bzw. Bauteilgruppen davon, wie beispielsweise die vorliegenden Auflageeinrichtungen, derart konstruiert sind, dass diese auch als Steinschlagschutzeinrichtungen dienen. Kumulativ oder alternativ können an dem Fahrzeug weitere derartige Schutzeinrichtungen vorgesehen sein, um die Umgebung insbesondere vor Steinschlag besser zu schützen.

Es versteht sich, dass es zum Lenken des Fahrzeuges ausreicht, wenn lediglich ein Teil der Mittel zum Rollen oder Gleiten des Fahrzeuges lenkbar sind. Besonders wendig und agil ist das Fahrzeug jedoch, wenn alle Mittel zum Rollen und/oder Gleiten mittels der Lenkung miteinander verbunden sind. Hierdurch ist das Führen des vorliegenden Fahrzeuges besonders zielgerichtet und dementsprechend sicher.

Die Sicherheit des Fahrzeuges ist weiter erhöht, wenn das Fahrzeug Mittel zum Beschleunigen, insbesondere zum Verzögern, des Fahrzeuges, aufweist. Verzögerungsmittel für das Fahrzeug sind besonders in Notsituationen wichtig, um hierbei das Fahrzeug möglichst zügig anhalten zu können. Auch ist durch Beschleunigungsmittel der Fahrspass mit dem vorliegenden Fahrzeug wesentlich erhöht.

Besonders effektiv kann das Fahrzeug abgebremst werden, wenn die Verzögerungsmittel eine Druckluftbremse umfassen. Eine bevorzugte Ausführungsvariante sieht diesbezüglich vor, dass die Verzögerungsmittel Druckluftenergiespeicher umfassen.

Vorzugsweise sind die Bremsen des vorliegenden Fahrzeuges derart dimensioniert, dass sich mit ihnen extrem kurze Bremswege realisieren lassen. Derart stark dimensionierte Bremsen sind mittels Druckluft besonders fein dosierbar.

Vorliegend kann jedes Rad des Fahrzeuges derartige Verzögerungsmittel aufweisen. Es versteht sich, dass Verzögerungsmittel auch nur paarweise entweder nur an Vorderräder oder nur an Hinterräder vorgesehen sein können.

Damit an dem Fahrzeug besonders einfach und leicht konstruierte Beschleunigungsmittel zur Verfügung gestellt werden können, ist es vorteilhaft, wenn die Beschleunigungsmittel Energiespeicher zum Speichern einer kinetischen Energie umfassen. Somit ist es möglich, Bewegungsenergie des Fahrzeuges als Energie zwischenzuspeichern, die zum Betätigen der Beschleunigungsmittel heran gezogen werden kann. Beispielsweise wird mittels der kinetischen Energie des Fahrzeuges Druckluft erzeugt und in entsprechenden Druckluftspeichern zwischengespeichert. Die gespeicherte Druckluft wird dann, etwa bei einem leichten Anstieg, zum Beschleunigen des Fahrzeugs genutzt.

Um insbesondere die Verzögerungsmittel gewichtssparend sowie sehr verschleißarm und dennoch leistungsstark ausbilden zu können, ist es vorteilhaft, wenn die Verzögerungsmittel Scheibenbremsen umfassen.

Eine vorteilhafte Variante sieht vor, dass die Bremsscheiben der Scheibenbremse an einer Felge eines Rollmittels, wie eines Rades, befestigt sind. Hierdurch lassen sich wirkungsvolle Bremsbestandteile mit baulich geringem Aufwand unmittelbar an einem Rad befestigen. Dies trägt besonders vorteilhaft dazu bei, das Gesamtgewicht des Fahrzeuges weiter zu verringern.

Alternativ ist es möglich, dass die Verzögerungsmittel Backenbremsen umfassen. Diese greifen mit ihrem Bremsbelägen außen an Felgenflanken an.

Um die Höchstgeschwindigkeit des Fahrzeuges auf baulich einfache Weise zu begrenzen, ist es vorteilhaft, wenn die Verzögerungsmittel Fliehkraftbremsen umfassen.

Es versteht sich, dass unterschiedliche Verzögerungsmittel auch kombiniert an dem Fahrzeug eingesetzt werden können. Beispielsweise verfügen die Vorderräder über Scheibenbremsen die Hinterräder jedoch nur über Backenbremsen. Zur Begrenzung der Höchstgeschwindigkeit sind an den Hinterrädern zusätzlich noch Fliehkraftbremsen vorgesehen.

Besonders vorteilhaft ist es, wenn Mittel zum Gleiten Schneekufen oder Wasserkufen umfassen. Hierdurch ist das Fahrzeug sowohl als Wintersportgerät als auch als Wassersportgerät einsetzbar.

Darüber hinaus ist es vorteilhaft, wenn die Mittel zum Rollen luftgefüllte Gummiräder umfassen. Luftgefüllte Gummiräder bieten eine unterstützende Federung und/oder Dämpfung, so dass auf zusätzliche Feder-Dämpfer-Elemente zwischen Fahrwerk und Rollmittel verzichtet werden kann. Außerdem ist das Fahrzeug somit auch auf festem Untergrund einsetzbar, bei welchem ein Gleiten des Fahrzeuges ausgeschlossen ist.

Um das vorliegende Fahrzeug unproblematisch und konstruktiv einfach an die Gegebenheiten unterschiedlichster Untergründe anpassen zu können, ist es vorteilhaft, wenn die Räder des Fahrzeuges an Kufen des Fahrzeuges befestigbar sind.

Da es sich bei der vorliegenden Erfindung um ein Fahrzeug handelt, mittels welchem hauptsächlich Abfahrten bewältigt werden, ist es vorteilhaft, wenn das Fahrzeug Mittel zum Kuppeln an einen Transportlift, wie einen Skilift, aufweist. Durch die Mittel zum Kuppeln kann das vorliegende Fahrzeug besonders vorteilhaft an Transporteinrichtungen eines Lifts eingehangen werden, um es etwa einen Berg hinauf zu transportieren.

Gegebenenfalls kann das Fahrzeug auch derart konstruiert sein, dass es als Sitzgelegenheit an einem Transportlift verwendet werden kann.

Damit ein unbeaufsichtigtes Fahrzeug sich unbeabsichtigt nicht fortbewegt, ist es vorteilhaft, wenn das Fahrzeug eine Wegrollsperre aufweist.

Beispielsweise kann eine derartige Wegrollsperre mittels der Auflageeinrichtung bereit gestellt werden, indem die Auflageeinrichtung ein Rad blockiert, wenn kein Bein oder Fuß auf der Auflageeinrichtung abgelegt ist. Erst durch das Gewicht oder durch die Kraft, welche mittels eines Bein oder eines Fußes auf die Auflageeinrichtung ausgeübt wird, wird die Radblockade aufgehoben und das Rad kann frei rollen.

Die Aufgabe der Erfindung wird auch von einer Felge für ein Fahrzeugrad gelöst, wobei die Felge die Aufnahme für eine Bremsscheibe und/oder eine Fliehkraftkupplung aufweist.

Insbesondere eine Felge mit einer derartigen Aufnahme ermöglicht es, ein wichtiges Bauteil eines effektiven Bremsmittels unmittelbar und mit baulich geringem Aufwand an dem vorliegenden Fahrzeug vorzusehen.

Dementsprechend ist es vorteilhaft, wenn an der Felge die Bremsscheibe und/oder die Fliehkraftbremse befestigt ist. Es versteht sich, dass bei einer Ausführungsvariante die Bremsscheibe auch einstückig mit der Felge ausgeführt sein kann.

Die Aufgabe der Erfindung wird auch von einer Bremsscheibe für eine Bremseinrichtung eines Fahrzeuges gelöst, wobei die Bremsscheibe eine Radfelge umfasst.

Es wurde gefunden, dass eine besonders gute Gewichtsreduzierung an einem Fahrzeug erzielt wird, wenn die Bremsscheibe eine Radfelge umfasst.

Da insbesondere hinsichtlich Fahrzeugen, bei denen ein geringes Gewicht eine sehr hohe Bedeutung hat, derartige Bremsscheiben vorteilhaft sind, sind die Merkmale hinsichtlich vorliegender Bremsscheiben auch ohne die übrigen Merkmale vorteilhaft.

Die Aufgabe vorliegender Erfindung wird ebenfalls von einer Verwendung eines Sitzes eines Fahrzeuges mit einer Lenkung gelöst, wobei der Sitz des Fahrzeuges als Lenker verwendet wird.

Weitere Vorteile, Eigenschaften und Ziele vorliegender Erfindung werden anhand nachfolgender Beschreibung anliegender Zeichnung erläutert, in welcher ein Fahrzeug mit einer Sitzlenkung sowie einige Bauteile bzw. Bauteilgruppen dargestellt sind.

Es zeigt
- Figur 1: schematisch eine perspektivische Ansicht eines Fahrzeuges mit einer Sitzlenkung,
- Figur 2: schematische eine Funktionsansicht im Längsschnitt des Fahrzeuges aus der Figur 1 während einer Geradeaus-Fahrt,

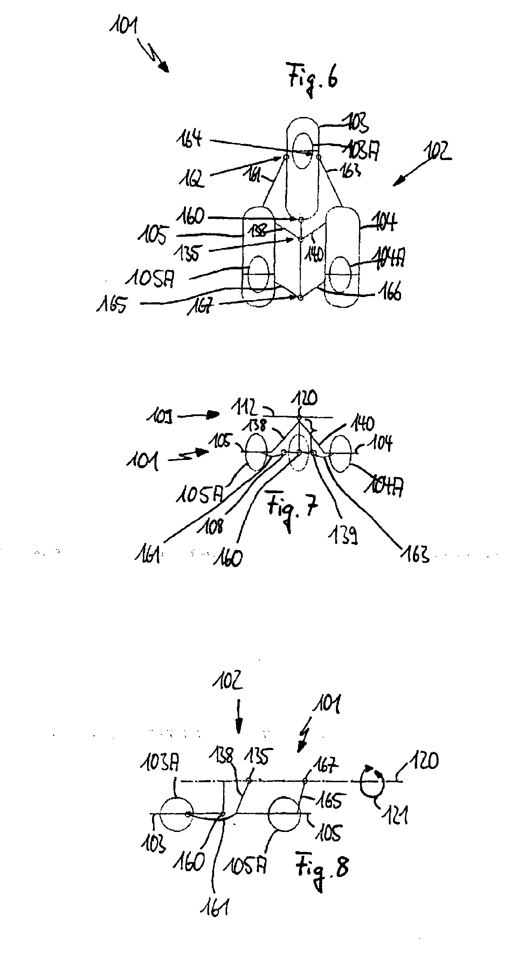

- Figur 3: schematisch eine Funktionsansicht im Querschnitt des Fahrzeuges nach der Darstellung der Figur 2,
- Figur 4: schematisch eine weitere Funktionsansicht im Längsschnitt des Fahrzeuges aus den Figuren 1 bis 3 während einer Linkskurvenfahrt,
- Figur 5: schematisch eine Funktionsansicht im Querschnitt des Fahrzeuges nach der Darstellung der Figur 4,
- Figur 6: schematisch eine Funktionsansicht im Längsschnitt eines Fahrzeuges mit drei Rädern,
- Figur 7: schematisch eine Funktionsansicht im Querschnitt des Fahrzeuges nach der Darstellung der Figur 6,
- Figur 8: schematisch eine seitliche Funktionsansicht des Fahrzeuges nach der Figur 7,
- Figur 9: schematisch eine Schnittdarstellung einer vorderen Sitzbefestigung an einem Fahrzeuggestell,
- Figur 10: schematisch eine Schnittdarstellung einer hinteren Sitzbefestigung an dem Fahrzeuggestell und
- Figuren 11 bis 15: schematisch mehrere Ansichten einer Felge mit einer Scheibenbremse.

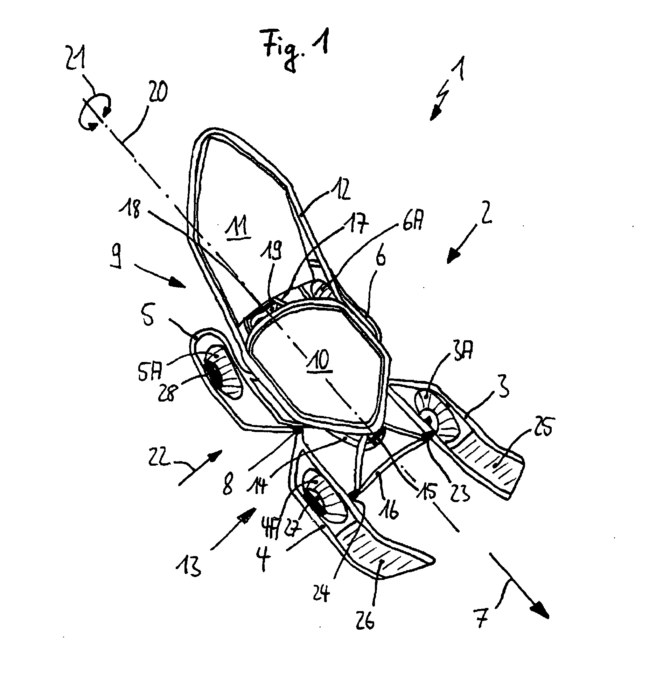

Das in der Figur 1 gezeigte Fahrzeug 1 weist ein Gestell 2 auf, welches aus einer Vielzahl an Rohren zusammen gesetzt ist. Das Gestell 2 umfasst insgesamt vier Kufen 3, 4, 5 und 6. Jede Kufe verfügt über ein einzelnes Rad 3A, 4A, 5A oder 6A. Vorliegend ist die Kufe 3 in Fahrtrichtung 7 gesehen die linke vordere Kufe, die Kufe 4 die rechte vordere Kufe, die Kufe 5 die hintere rechte Kufe und die Kufe 6 die hintere linke Kufe des Fahrzeuges 1.

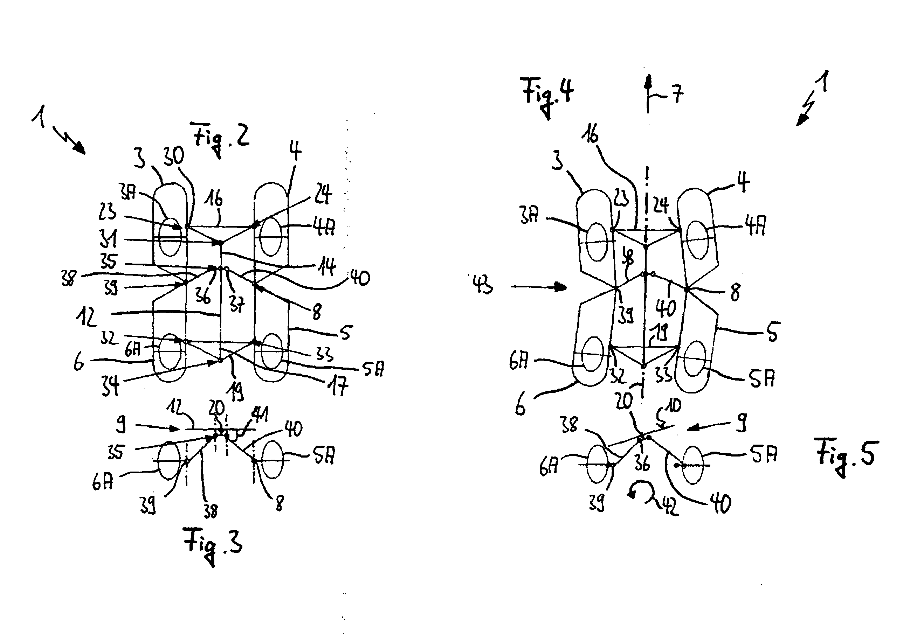

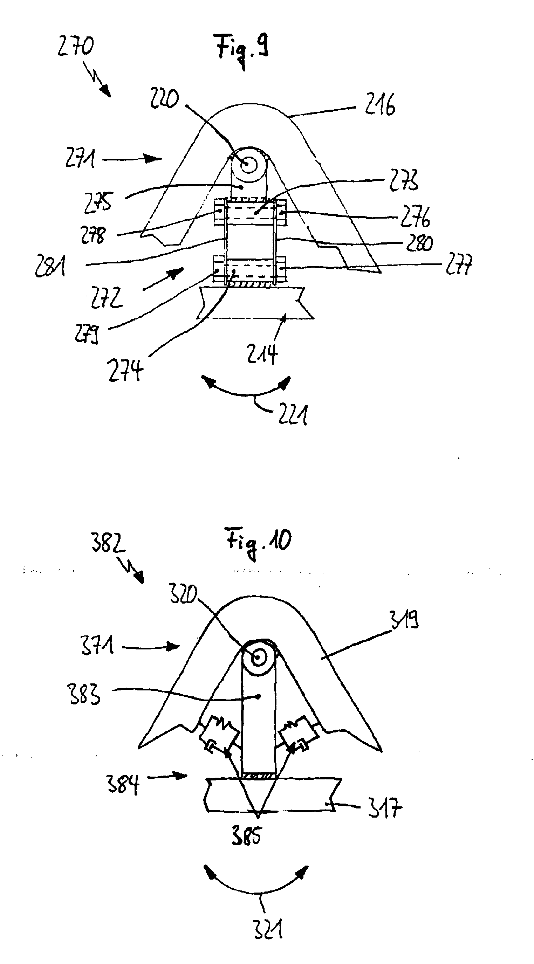

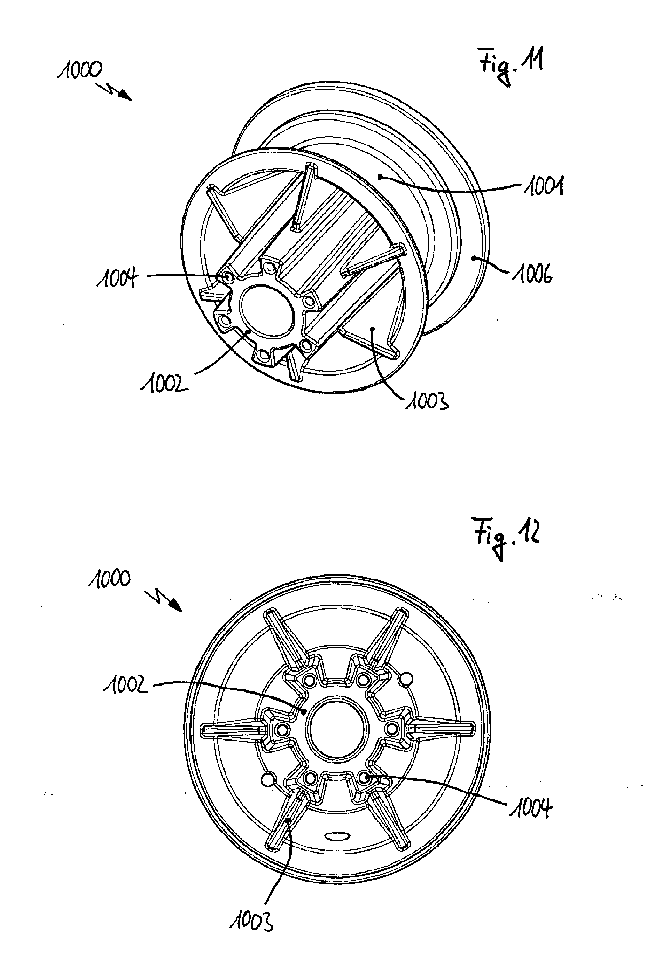

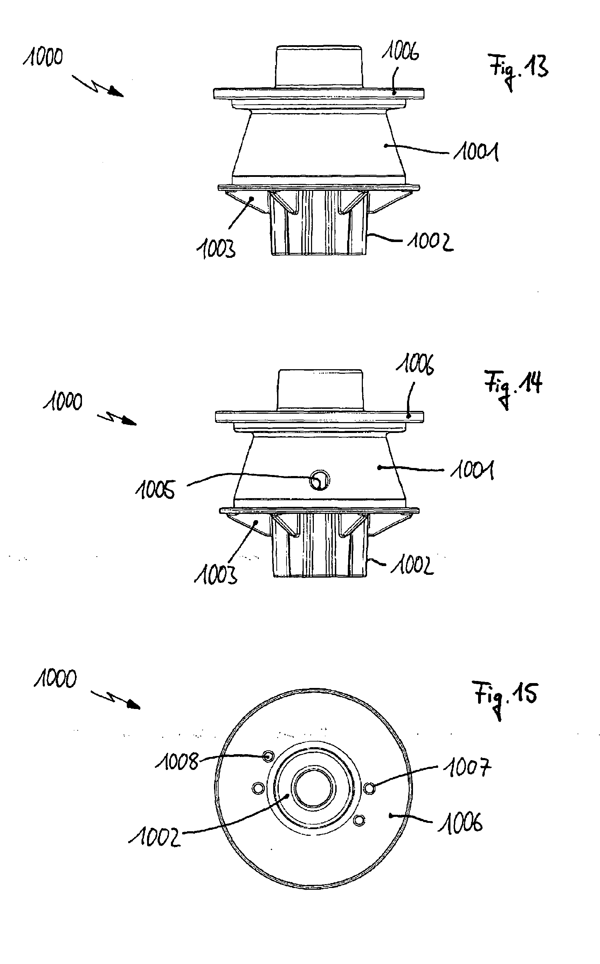

Die linke vordere Kufe 3 und die linke hintere Kufe 6 sind mittels eines Knotengelenks (hier nicht dargestellt, siehe Figuren 2 und 4, Bezugsziffer 39, zweites Knotengelenk) miteinander verbunden. Gleiches gilt für die rechte vordere Kufe 4 und die rechte hintere Kufe 5, die mittels eines Knotengelenkes 8 miteinander fest, aber drehbar verbunden sind.

Darüber hinaus weist das Fahrzeug 1 einen Sitz 9 auf, der eine Sitzfläche 10 und eine Rückenlehne 11 umfasst, die in einem Sitzrahmen 12 befestigt sind.

Der Sitzrahmen 12 ist im vorderen Bereich 13 des Fahrzeuges 1 mittels eines vorderen Sitzrahmenunterzuges 14 und eines Kippverbinders 15 an einem vorderen Verbindungswinkel 16 angeordnet.

Entsprechend ist der vordere Sitzrahmenunterzug 14 mittels eines hinteren Sitzrahmenunterzugs 17 und eines Feder-Dämpfer-Verbinders 18 mit einem hinteren Verbindungswinkel 19 verbunden.

Der Sitzrahmen 12 ist mit seinem vorderen Sitzrahmenunterzug 14 und mit seinem hinteren Sitzrahmenunterzug 17 um eine Horizontaldrehachse 20 gemäß des Doppelpfeils 21 neigbar gelagert.

Wird der Sitz 9 um die Horizontaldrehachse 20 in Fahrtrichtung 7 gesehen im Uhrzeigersinn geneigt, bewegt sich das rechte Knotengelenk 8 auf Grund einer Verbindung zu dem Sitzrahmen 12, welche unterhalb der Sitzfläche 10 vorhanden ist, in Bewegungsrichtung 22, wodurch sich sowohl die vordere rechte Kufe 4 als auch die rechte hintere Kufe 6 um das Knotengelenk 8 bewegen. Hierdurch durchfährt das Fahrzeug 1 eine Rechtskurve.

Die rechte vordere Kufe 4 und die linke vordere Kufe 3 sind mittels des vorderen Verbindungswinkels 16 miteinander verbunden. Gleiches gilt für die rechte hintere Kufe 5 und die linke hintere Kufe 6, welche durch den hinteren Verbindungswinkel 19 miteinander verbunden sind.

Hierzu ist die linke vordere Kufe 3 mittels eines ersten Drehgelenkes 23 des vorderen Verbindungswinkels 16 mit dem vorderen Verbindungswinkel 16 verbunden. Dementsprechend ist die rechte vordere Kufe 4 mittels eines zweiten Drehgelenkes 24 des vorderen Verbindungswinkels 16 mit diesem vorderen Verbindungswinkel 16 verbunden.

Um am Fahrzeug 1 eine Kurvenfahrt einzuleiten und das Fahrzeug 1 zusätzlich in Kurven zu lenken, verfügt die linke vordere Kufe 3 über eine linke Fußauflage 25 und die rechte vordere Kufe 4 über eine rechte Fußauflage 26. Über die beiden Fußauflagen 25, 26 kann ein Fahrzeugführer durch Aufbringen eines entsprechenden Drucks eine Lenkung des Fahrzeuges 1 einleiten und damit eine Kurvenfahrt bestimmen.

Es versteht sich, dass diese Funktion der Fußlenkung zusätzlich zu der Funktion der Sitzlenkung des Fahrzeuges 1 unterstützend wirken kann. Auf der anderen Seite kann das Fahrzeug 1 auch ausschließlich über die Fußlenkung gelenkt werden, wobei in einer derartigen Ausführungsvariante der Sitz 9 starr an dem Fahrzeug angeordnet ist oder gegebenenfalls um die Horizontaldrehachse 20 neigbar ist - jedoch dann ohne Wirkfunktion auf die Kufen 3, 4, 5 und 6 bzw. Laufräder 3A, 4A, 5A und 6A des Fahrzeuges 1.

Jede der vier Kufen 3, 4, 5 und 6 weist vorliegend ein bremsbares Laufrad 3A, 4A, 5A und 6A auf, welches mittels einer Scheibenbremsanlage 27, 28 gebremst werden kann. In der Darstellung nach der Figur 1 ist eine derartige Scheibenbremsanlage 27 und 28 nur an den Laufrädern 4A und 5A eingezeichnet.

Die in der Figur 2 gezeigte Funktionsansicht des Fahrzeuges 1 zeigt schematisch den Sitzrahmen 12 mit seinem vorderen Sitzrahmenunterzug 14 und seinem hinteren Sitzrahmenunterzug 17. Der vordere Sitzrahmenunterzug 14 ist mittels des vorderen Verbindungswinkels 16 sowohl mit der linken vorderen Kufe 3 als auch mit der rechten vorderen Kufe 4 gelenkig verbunden.

Der vordere Verbindungswinkel 16 weist hierzu ein erstes Drehgelenk 23 und ein zweites Drehgelenk 24 auf. Sowohl das Drehgelenk 23 als auch das Drehgelenk 24 sind um eine Vertikalachse 30 (hier nur explizit an dem ersten Drehgelenk 23 eingezeichnet) drehbar. Die Vertikalachse 30 verläuft vorliegend senkrecht zur Papierebene und stößt im rechten Winkel aus ihr heraus.

Zwischen dem vorderen Verbindungswinkel 16 und dem vorderen Sitzrahmenunterzug 14 ist ein drittes Drehgelenk 31 vorgesehen, welches ebenfalls eine Vertikalachse hat, die sich senkrecht zur Papierebene erstreckt.

Der hintere Sitzrahmenunterzug 17 weist drei weitere Drehgelenke 32, 33 und 34 auf, wobei das erste Drehgelenk 32 des hinteren Verbindungswinkels 19 eine Verbindung zwischen diesem hinteren Verbindungswinkel 19 und der linken hinteren Kufe 6 darstellt. Das zweite Drehgelenk 33 verbindet den hinteren Verbindungswinkel 19 mit der rechten hinteren Kufe 5 und das dritte Drehgelenk 34 verbindet den hinteren Verbindungswinkel 19 mit dem hinteren Sitzrahmenunterzug 17. Auch diese Drehgelenke 32, 33 und 34 drehen jeweils um eine Vertikalachse 30.

Zwischen den Drehgelenken 31 und 34 ist ein Doppeldrehgelenk 35 vorgesehen. Das Doppeldrehgelenk 35 weist eine erste Horizontaldrehachse 36 und eine zweite Horizontaldrehachse 37 auf. An der ersten Horizontaldrehachse 36 ist ein erster Anlenker 38 befestigt, der mit seinem weiteren Ende an dem linken Knotengelenk 39 befestigt ist. In dem linken Knotengelenk 39 sind des Weiteren die linke vordere Kufe 3 und die linke hintere Kufe 6 drehbar miteinander verbunden.

Die zweite Horizontaldrehachse 37 bildet eine erste Lagerstelle eines zweiten Anlenkers 40, der mit seinem weiteren Ende gelenkig in dem rechten Knotengelenk 8 um eine Vertikalachse 30 gelagert ist. In dem rechten Knotengelenk 8 sind die rechte vordere Kufe 4 und die rechte hintere Kufe 6 gelenkig miteinander verbunden.

Das Doppeldrehgelenk 35 ist um einen Abstand 41 unterhalb der Horizontaldrehachse 20 des Sitzrahmens 12 befestigt, so dass ein verlängerter Hebelarm gebildet ist, wodurch das Doppeldrehgelenk 35 weiter auslenkbar ist als ohne diesen Hebelarm.

In den Figuren 4 und 5 ist dargestellt, wie sich das Gestell 2 des Fahrzeuges 1 stellt, wenn das Fahrzeug 1 eine Linkskurve fährt.

Nach der Darstellung der Figur 5 ist der Sitz 9 mit seiner Sitzfläche 10 um die Horizontaldrehachse 20 in Fahrtrichtung 7 gesehen entgegen dem Uhrzeigersinn gemäß der Drehrichtung 42 geneigt worden.

Durch diese Neigung wurde der erste Anlenker 38 nach innen, hin zu der horizontalen Drehachse 20 gezogen, so dass hierbei auch das linke Knotengelenk 39 gemäß Bewegungsrichtung 43 auf die horizontale Drehachse 20 zu bewegt wurde. Dementsprechend wird das rechte Knotengelenk 8 gemäß der Bewegungsrichtung 43 mittels des zweiten Anlenkers 40 von der horizontalen Drehachse 20 weg bewegt.

Da die vorderen Kufen 3 und 4 mittels des linken Knotengelenks 39 und des rechten Knotengelenks 8 mit den hinteren Kufen 5 und 6 gelenkig verbunden sind, werden die linke vordere Kufe 3 um das erste Drehgelenk 23 des vorderen Verbindungswinkels 16, die rechte vordere Kufe 4 um das zweite Drehgelenk 24 des vorderen Verbindungswinkels 16, die linke hintere Kufe 6 um das erste Drehgelenk 32 des hinteren Verbindungswinkels 19 und die rechte hintere Kufe 5 um das zweite Drehgelenk 33 des hinteren Verbindungswinkels 19 gedreht. Hierbei stützen sich die vorderen Kufen 3 und 4 mittels des vorderen Verbindungswinkels 16 gegeneinander ab. Auch die hinteren Kufen 5 und 6 stützen sich mittels des hinteren Verbindungswinkels 19 gegeneinander ab.

Das in den Figuren 6, 7 und 8 gezeigte Fahrzeug 101 weist lediglich drei Kufen 103, 104 und 105 mit jeweils einem Laufrad 103A, 104A und 105A auf. Das Gestell 102 des Fahrzeuges 101 umfasst einen Sitzrahmen 112, der um eine Horizontaldrehachse 120 gemäß den Drehrichtungen des Doppelpfeils 121 neigbar ist.

Die vordere Kufe 103 ist mittels eines Drehgelenkes 160 an dem Gestell 102 des Fahrzeuges 101 befestigt. Mittels eines Doppeldrehgelenkes 135 ist der Sitzrahmen 112 des Sitzes 109 an einem ersten Anlenker 138 und einem zweiten Anlenker 140 mit einem rechten Knotengelenk 139 und einem linken Knotengelenk 108 verbunden. In dem Knotengelenk 108 ist ein dritter Anlenker 161 befestigt, der wiederum in einem weiteren Drehgelenk 162 an der ersten Kufe 103 befestigt ist. Der zweite Anlenker 140 ist mittels des rechten Knotengelenkes 139 und einem vierten Anlenker 163 mit einem zweiten Drehgelenk 164 der vorderen Kufe 103 verbunden. Zusätzlich sind die Kufen 104 und 105 über weitere Kufenanlenker 165 und 166 an den Sitzrahmen 112 mittels eines zusätzlichen Drehgelenks 167 befestigt.

Bei dem in der Figur 9 gezeigten Detailausschnitt einer vorderen Sitzverbindung 270 handelt es sich um einen Kippverbinder, wie er bei dem Fahrzeug 1 nach der Figur 1 verwendet wird. Anhand des Detailausschnittes der vorderen Sitzverbindung 270 erkennt man gut einen vorderen Verbindungswinkel 260, an welchem in seiner oberen Winkelspitze 271 eine Horizontaldrehachse 220 vorgesehen ist, um welche der vordere Sitzrahmenunterzug 214 gemäß des Doppelpfeils 221 pendeln kann.

Die vordere Sitzverbindung 270 weist einen Längenausgleich 272 auf, mit welchem es möglich ist, dass der vordere Sitzrahmenunterzug 214 zusätzlich eine Bewegung in Richtung der Horizontaldrehachse 220 durchführen kann. Dies ist erforderlich, um einen gewissen Längendifferenzausgleich vornehmen zu können, der auf Grund der Bewegung des vorderen Verbindungswinkels 216 während einer Kurvenfahrt entsteht.

Nach der Darstellung der Figur 9 ermöglicht der gezeigte Längenausgleich 272 eine Bewegung des vorderen Verbindungswinkels 216 relativ zu dem vorderen Sitzrahmenunterzug 214 aus der Papierebene hinaus beziehungsweise in die Papierebene hinein.

Der Längenausgleich 272 weist hierzu eine erste Nabe 273 und eine zweite Nabe 274 auf. Die erste Nabe 273 ist über eine Horizontaldrehachsen-Lasche 275 mit der horizontalen Drehachse 220 verbunden, während die zweite Nabe 274 direkt an den vorderen Sitzreihenunterzug 214 geschweißt ist.

Sowohl durch die erste Nabe 273 als auch durch die zweite Nabe 274 ist jeweils eine Bolzenschraube 276, 277 gesteckt und mittels einer ersten Kontermutter 278 und einer zweiten Kontermutter 279 verspannt.

Verbunden sind die beiden Bolzenschrauben 276, 277 durch eine erste Vertikallasche 280 und eine zweite Vertikallasche 281. Die Vertikallaschen 280, 281 stellen die eigentliche Verbindung zwischen dem Sitzrahmenunterzug 214 und dem vorderen Verbindungswinkel 216 her.

Lager die r

Der in der Figur 10 gezeigte hintere Sitzverbinder 382 besteht im Wesentlichen aus einer Vertikalverbindung 383, die gemäß des Doppelpfeils 321 um eine Horizontaldrehachse 320 pendelt. Die Horizontaldrehachse 320 ist in einer oberen Winkelspitze 371 eines hinteren Verbindungswinkels 319 vorgesehen.

An dem der Horizontaldrehachse 320 entgegen gesetzten Ende 384 des Vertikalverbinders 383 ist ein hinterer Sitzrahmenunterzug 317 angeschweißt.

Um die Pendelbewegung gemäß des Doppelpfeils 321 des hinteren Sitzrahmenunterzugs 317 um die Horizontaldrehachse 320 zu dämpfen, verfügt der hintere Sitzverbinder 382 über ein Feder-Dämpfer-System 385, sodass der hintere Sitzverbinder 382 einen Feder-Dämpfer-Verbinder zwischen dem hinteren Verbindungswinkel 319 und dem hinteren Sitzrahmenunterzug 317 bildet.

Die in den Figuren 11 bis 15 gezeigte Felge 1000 weist ein Felgenbett 1001 auf, an welchem ein Mantel (hier nicht gezeigt) eines Reifes (hier nicht gezeigt) aufgezogen und angeordnet wird.

Zum Befestigen der Felge 1000 an einer Radnabe (hier nicht dargestellt) weist die Felge 1000 einen Felgentragkörper 1002 auf. Der Felgentragkörper 1002 ist mittels Felgenstegen 1003 (hier nur exemplarisch beziffert) mit dem Felgenbett 1001 stabil verbunden. Der Felgentragkörper 1002 weist eine Felgennabe 1004 mit Lager (hier nicht dargestellt) auf. Die gesamte Felge 1000 wird mit der Felgennabe 1004 und den Lagern an einer Radwelle drehbar gelagert.

Darüber hinaus weist der Felgentragkörper 1002 insgesamt sechs Gewindebohrungen 1005 (hier nur exemplarisch beziffert) auf, an welchen eine Bremsscheibe (hier nicht dargestellt) angeschraubt werden kann. In diese Gewindebohrungen 1005 wird jeweils eine Schraube (hier nicht dargestellt) eingedreht, sodass der Felgentragkörper 1002 mit der Bremsscheibe verklemmt. Mittels einer derartigen Scheibenbremse mit einer Bremsscheibe kann eine Radbewegung, insbesondere eine Felgenrotation, unmittelbar an der Felge 1000 selbst abgebremst werden. Vorteilhafter Weise kann auf Grund der vorliegenden Felge 1000 auf eine Scheibenbremsenaufnahme an der Radnabe verzichtet werden.

Zusätzlich können an den Felgenflanken 1006 (hier nur exemplarisch beziffert) Bremsbeläge einer Backenbremse (hier nicht dargestellt) anpacken.

Im Felgenbett 1001 befindet sich eine Durchgangsbohrung 1007, in welche ein Luftventil (hier nicht dargestellt) zum Befüllen des Reifens der Felge 1000 eingebracht wird.

Darüber hinaus kann an der Felge 1000 eine Fliehkraftbremse (hier nicht gezeigt) vorgesehen sein, mittels welcher eine maximale Geschwindigkeit eines Fahrzeuges eingestellt werden kann. Da eine derartige Fliehkraftbremse und deren Funktion an sich bekannt ist, wird vorliegend nicht weiter darauf eingegangen.

Die Befestigung der Fliehkraftbremse an dem Felgenbett 1001 beziehungsweise an dem Felgentragkörper 1002 ist mittels einer weiteren Schraubverbindung über vier Schrauben realisiert, wobei die Felge 1000 zu diesem Zweck vier Fliehkraftbremsendurchgangsbohrungen 1007 (hier nur exemplarisch beziffert) aufweist. Die Durchgangsbohrungen 1007 weisen entsprechende Gewinde 1008 in dem Felgenbett 1001 beziehungsweise in dem Felgentragkörper 1002 auf, in welche entsprechende Befestigungsschrauben (hier nicht dargestellt) eingedreht werden können. Somit ist die Fliehkraftbremse betriebssicher an der Felge 1000 angeschraubt.

Es versteht sich, dass Bremsschreibe auch einstückig mit den übrigen Felgenbereichen, wie Felgenbett 1001 oder Felgentragkörper 1002, ausgebildet sein können.

### Bezugsziffernliste:

- 1: Fahrzeug
- 2: Gestell
- 3: linke vordere Kufe
- 3A: Laufrad der linken vorderen Kufe 3
- 4: rechte vordere Kufe
- 4A: Laufrad der rechten vorderen Kufe 4
- 5: rechte hintere Kufe
- 5A: Laufrad der rechten hinteren Kufe 5
- 6: linke hintere Kufe
- 6A: Laufrad der linken hinteren Kufe 6
- 7: Fahrrichtung
- 8: rechtes Knotengelenk
- 9: Sitz
- 10: Sitzfläche
- 11: Rückenlehne
- 12: Sitzrahmen
- 13: vorderer Bereich des Fahrzeuges 1
- 14: Sitzrahmenunterzug
- 15: Kippverbinder
- 16: vorderer Verbindungswinkel
- 17: hinterer Sitzrahmenunterzug
- 18: Feder-Dämpfer-Verbinder
- 19: hinterer Verbindungswinkel
- 20: Horizontaldrehachse
- 21: Doppelpfeil
- 22: Bewegungsrichtung
- 23: erstes Drehgelenk des vorderen Verbindungswinkels 16
- 24: zweites Drehgelenk des vorderen Verbindungswinkels 16
- 25: linke Fußauflage
- 26: rechte Fußauflage
- 27: Scheibenbremsanlage des Laufrades 4a
- 28: Scheibenbremsanlage des Laufrades 5a
- 30: Vertikalachse
- 31: drittes Gelenk des vorderen Verbindungswinkels 16
- 32: erstes Drehgelenk des hinteren Verbindungswinkels 19
- 33: zweites Drehgelenk des hinteren Verbindungswinkels 19
- 34: drittes Drehgelenk des hinteren Verbindungswinkels 19
- 35: Doppeldrehgelenk
- 36: erste Horizontaldrehachse
- 37: zweite Horizontaldrehachse
- 38: erster Anlenker
- 39: linkes Knotengelenk
- 40: zweiter Anlenker
- 41: Abstand
- 42: Drehrichtung entgegen dem Uhrzeigersinn
- 43: Bewegungsrichtung
- 101: Fahrzeug
- 102: Gestell
- 103: erste Kufe
- 104: zweite Kufe
- 105: dritte Kufe
- 103A: erstes Laufrad
- 104A: zweites Laufrad
- 105A: dritte Laufrad
- 108: linkes Knotengelenk
- 109: Sitz
- 112: Sitzrahmen
- 120: Horizontaldrehachse
- 121: Drehrichtungen des Doppelpfeils
- 135: Doppeldrehgelenk
- 138: erster Anlenker
- 139: rechtes Knotengelenk
- 140: zweiter Anlenker
- 160: Drehgelenk
- 161: dritter Anlenker
- 162: Drehgelenk
- 163: vierter Anlenker
- 164: zweites Drehgelenk
- 165: erster Kufenanlenker
- 166: zweiter Kufenanlenker
- 167: zusätzliches Drehgelenk
- 214: Sitzrahmenunterzug
- 216: vorderer Verbindungswinkel
- 220: Horizontaldrehachse
- 221: Doppelpfeil
- 260: vorderer Verbindungswinkel
- 270: vordere Sitzverbindung
- 271: obere Winkelspitze
- 272: Längenausgleich
- 273: erste Nabe
- 274: zweite Nabe
- 275: Horizontaldrehachsen-Lasche
- 276: erste Bolzenschraube
- 277: zweite Bolzenschraube
- 278: erste Kontermutter
- 279: zweite Kontermutter
- 280: erste Vertikallasche
- 281: zweite Vertikallasche
- 317: hinterer Sitzrahmenunterzug
- 319: hinterer Verbindungswinkel
- 320: Horizontaldrehachse
- 321: Doppelpfeil
- 371: obere Winkelspitze
- 382: hinterer Sitzverbinder
- 383: Vertikalverbindung
- 384: entgegengesetztes Ende
- 385: Feder-Dämpfer-System
- 1000: Felge
- 1001: Felgenbett
- 1002: Felgentragkörper
- 1003: Felgenstege
- 1004: Felgennabe
- 1005: Gewindebohrungen
- 1006: Felgenflanken
- 1007: Fliehkraftbremsendurchgangsbohrungen
- 1008: Gewinde

## Patentansprüche

1. Fahrzeug (1) mit einem Gestell (2), an welchem wenigstens ein Sitz (9) angeordnet ist, mit Mitteln zum Rollen (3A, 4A, 5A, 6A) und/oder Gleiten (3, 4, 5, 6) auf einem Untergrund und mit einer Lenkung zum Lenken des Fahrzeuges, ***dadurch gekennzeichnet, dass*** der Sitz (9) Mittel zum Lenken des Fahrzeuges umfasst.

2. Fahrzeug nach Anspruch 1, ***dadurch gekennzeichnet, dass*** der Sitz (9) ein Bestandteil der Lenkung des Fahrzeuges (1) ist.

3. Fahrzeug nach einem der Ansprüche 1 oder 2, ***dadurch gekennzeichnet, dass*** der Sitz (9) derart mit den Mitteln zum Rollen (3A, 4A, 5A, 6A) und/oder Gleiten (3, 4, 5, 6) verbunden ist, dass eine Relativbewegung des Sitzes (9) gegenüber dem Gestell (2) des Fahrzeuges (1) eine Relativbewegung der Mittel zum Rollen (3A, 4A, 5A, 6A) und/oder Gleiten (3, 4, 5, 6) gegenüber dem Gestell (2) des Fahrzeuges (1) bewirkt und hierdurch das Fahrzeug gelenkt wird.

4. Fahrzeug nach einem der Ansprüche 1 bis 3, ***dadurch gekennzeichnet, dass*** der Sitz (9) drehbar um eine im Wesentlichen Horizontal orientierte Drehachse (20) am Gestell (2) gelagert ist.

5. Fahrzeug nach einem der Ansprüche 1 bis 4, ***dadurch gekennzeichnet, dass*** die Lenkmittel ein Lenkgetriebe, insbesondere ein Lenkgestänge, umfassen, und das Lenkgetriebe und/oder das Lenkgestänge den Sitz (9) und die Mittel zum Rollen (3A, 4A, 5A, 6A) und/oder Gleiten (3, 4, 5, 6) miteinander verbindet.

6. Fahrzeug nach einem der Ansprüche 1 bis 5, ***dadurch gekennzeichnet, dass*** die Lenkung des Fahrzeuges (1) weitere Mittel zum Lenken des Fahrzeuges (1) umfasst, welche mittels Beinen und/oder Fü-ßen eines Fahrzeugführers betätigbar an dem Fahrzeug (9) angeordnet sind, wobei die Lenkmittel vorzugsweise Auflageeinrichtungen (25, 26), insbesondere mit Haltemittel, für Beine und/oder Füße eines Fahrzeugführers aufweisen.

7. Fahrzeug nach einem der Ansprüche 1 bis 6, ***dadurch gekennzeichnet, dass*** das Fahrzeug (1) Mittel zum Beschleunigen, insbesondere auch zum Verzögern (27, 28), des Fahrzeuges (1) aufweist, wobei die Beschleunigungsmittel vorzugsweise Energiespeicher zum Speichern einer kinetischen Energie umfassen.

8. Fahrzeug nach Anspruch 7, ***dadurch gekennzeichnet, dass*** insbesondere die Verzögerungsmittel (27, 28) Fliehkraft-, Scheiben-, Backen- und/oder Druckluftbremsen sowie vorzugsweise eine Wegrollsperre umfassen.

9. Fahrzeug nach einem der Ansprüche 1 bis 8, ***dadurch gekennzeichnet, dass*** die Mittel zum Gleiten (3, 4, 5, 6) Schneekufen oder Wasserkufen und/oder die Mittel zum Rollen (3A, 4A, 5A, 6A) luftgefüllte Räder, welche vorzugsweise an Kufen (3, 4, 5, 6) des Fahrzeuges (1) befestigbar sind, umfassen.

10. Felge für ein Fahrzeugrad, ***dadurch gekennzeichnet, dass*** die Felge eine Aufnahme für eine Bremsscheibe und/oder eine Fliehkraftbremse und/oder eine Backenbremse aufweist.

11. Bremsscheibe für eine Bremseinrichtung eines Fahrzeugs, ***dadurch gekennzeichnet, dass*** die Bremsscheibe eine Radfelge umfasst.

12. Verwendung eines Sitzes eines Fahrzeuges mit einer Lenkung, ***dadurch gekennzeichnet, dass*** der Sitz des Fahrzeuges als Lenker verwendet wird.

13. Verfahren zum Lenken eines Fahrzeuges mit einem Sitz, welches auf einem Untergrund rollt oder gleitet, ***dadurch gekennzeichnet, dass*** zum Lenken des Fahrzeuges der Sitz relativ zum Fahrzeug bewegt und mittels des Sitzes eine Lenkung und/oder ein Lenkgestänge betätigt wird.

14. Verfahren nach Anspruch 13, ***dadurch gekennzeichnet, dass*** das Fahrzeug (1) nach rechts gelenkt wird, indem der Sitz (9) des Fahrzeuges (1) in Fahrtrichtung (7) gesehen im Uhrzeigersinn um eine Horizontaldrehachse (20) geneigt wird.
